# EUROPÄISCHE PATENTSCHRIFT

(11) **EP 2 557 445 B1**
(45) Veröffentlichungstag und Bekanntmachung des Hinweises auf die Patenterteilung: **09.12.2020**
(21) Anmeldenummer: 12180040.3
(22) Anmeldetag: 10.08.2012
(51) Int. Cl.: G02B 21/16, G02B 21/00, G02B 27/28

(54) **Einrichtung und Verfahren zum Verteilen von Beleuchtungslicht und Detektionslicht in einem Mikroskop**
Device and method for distributing illumination light and detection light in a microscope
Dispositif et procédé destinés à répartir la lumière d'éclairage et la lumière de détection dans un microscope

(30) Priorität: 12.08.2011 DE 102011052686
(43) Veröffentlichungstag der Anmeldung: 13.02.2013
(73) Patentinhaber: Leica Microsystems CMS GmbH, 35578 Wetzlar (DE)
(72) Erfinder: Schreiber, Frank, 72574 Bad Urach (DE)
(74) Vertreter: Schaumburg und Partner Patentanwälte mbB

(56) Entgegenhaltungen:
- EP-A1- 0 015 129
- WO-A2-02/50516
- DE-A1- 10 031 458
- JP-A- 2001 091 842
- US-A- 5 052 786
- US-A1- 2006 017 001
- US-A1- 2009 213 376

## Beschreibung

Die Erfindung betrifft eine Einrichtung zum Verteilen von Beleuchtungslicht und Detektionslicht in einem Mikroskop, mit einer Verteileroptik, die das Beleuchtungslicht auf eine Probe und das von der Probe ausgehende Detektionslicht auf einen Detektor leitet. Ferner betrifft die Erfindung ein Verfahren zum Verteilen von Beleuchtungslicht und Detektionslicht in einem Mikroskop.

In der Mikroskopie kommen häufig optische Strahlteiler zum Einsatz, welche die Funktion haben, das von einer Lichtquelle ausgesendete Beleuchtungslicht auf die abzubildende Probe und das von der Probe ausgehende Detektionslicht auf einen Detektor zu leiten. Das Beleuchtungslicht dient beispielsweise in der Fluoreszenzmikroskopie zur Anregung von Fluoreszenzstrahlung. Es wird in dieser Funktion im Folgenden auch als Anregungslicht bezeichnet.

Ein optischer Strahlteiler ist in der Regel so ausgebildet, dass er Licht eines vorbestimmten Wellenlängenbereichs transmittiert und Licht eines anderen Wellenlängenbereichs reflektiert. Er ist deshalb speziell auf die in dem jeweiligen Mikroskop genutzten Kombinationen von Wellenlängen des Anregungslichtes und des Fluoreszenzlichtes auszulegen. Dies ist im Hinblick auf eine möglichst weitläufige Verwendbarkeit eines solchen Strahlteilers von Nachteil.

Demgegenüber sind akustooptische Strahlteiler, die beispielsweise in der Konfokalmikroskopie eingesetzt werden, in vergleichsweise weiten Grenzen auf die von ihnen zu reflektierenden und transmittierenden Wellenlängen einstellbar. Beispielsweise können solche akustooptischen Strahlteiler in Verbindung mit sogenannten Weißlichtlaserquellen dazu verwendet werden, aus einem breiten Wellenlängenspektrum nach Belieben einzelne Anregungswellenlängen auszuwählen. Das Einstellen eines akustooptischen Strahlteilers auf bestimmte Wellenlängen erfordert jedoch einen gewissen technischen Aufwand, z.B. in Form einer entsprechenden Programmierung des Strahlteilers durch Anlegen elektrischer Felder unterschiedlicher Frequenzen. Dies ist dann von besonderem Nachteil, wenn die Einstellung des Strahlteilers des Öfteren zu ändern ist, wie dies beispielsweise bei der Verwendung von Festkörper-Laserlichtquellen der Fall ist, deren Ausgangswellenlängen eine vergleichsweise starke Temperaturdrift aufweisen. Insbesondere ist dies auch von Nachteil, wenn die Wellenlänge bzw. das Wellenlängenspektrum der Laserlichtquelle nicht bekannt und/oder variabel ist. Außerdem sind akustooptische Strahlteiler vergleichsweise teuer.

Aus der DE 100 31 458 A1 ist eine Einrichtung zum Verteilen von Beleuchtungslicht und Detektionslicht in einem Scan-Mikroskop bekannt. Diese Einrichtung enthält einen optischen Zirkulator, dessen Funktion auf dem Faraday-Effekt beruht und der das Beleuchtungslicht auf eine Probe und das von der Probe ausgehende Detektionslicht auf einen Detektor leitet.

In der EP 0 015 129 A1 ist ein optisches Kommunikationssystem mit einer Polarisationseinheit beschrieben, in der mehrere Lichtpfade definiert sind. Diese Lichtpfade enthalten jeweils einen Faraday-Rotator, der die Polarisationsrichtung des durch ihn tretenden Lichtes um einen ersten Winkelbetrag in einem vorbestimmten Drehsinn dreht, sowie eine dem Faraday-Rotator nachgeordnete optisch aktive Substanz, die das Licht um einen zweiten Winkebetrag in dem vorbestimmten Drehsinn dreht.

Aufgabe der Erfindung ist es, eine Einrichtung und ein Verfahren anzugeben, die eine möglichst einfache und flexible Verteilung von Beleuchtungslicht und Detektionslicht in einem Mikroskop ermöglichen.

Die Erfindung löst diese Aufgabe durch die Einrichtung nach Anspruch 1 und das Verfahren nach Anspruch 10.

Im Unterschied zu den aus dem Stand der Technik bekannten Lösungen sieht die erfindungsgemäße Einrichtung eine weitgehend wellenlängenunabhängige Verteilung des Beleuchtungslichtes und Detektionslichtes in dem Mikroskop vor. So wird in der vorliegenden Erfindung das Licht nicht in Abhängigkeit seiner Wellenlänge, sondern in Abhängigkeit seines Polarisationszustands verteilt. Insbesondere werden unterschiedlich polarisierte Anteile des Detektionslichtes auf verschiedenen Lichtpfaden zu dem Detektor geleitet.

Das Beleuchtungslicht ist dabei beispielsweise von einer Laserlichtquelle ausgesendetes Anregungslicht, das die abzubildende Probe zur Abgabe von Fluoreszenzlicht anregt. Das Detektionslicht beinhaltet dann zum einen das Fluoreszenzlicht sowie das an der Probe reflektierte Anregungslicht und ggf. weitere Lichtanteile wie phosphoresziertes Licht, Raman-Streulicht, etc.

Derjenige Teil des Detektionslichtes, der wie das auf die Probe gerichtete Beleuchtungslicht einen ersten Polarisationszustand aufweist, wird über den polarisationsabhängigen Lichtverteiler in den ersten Lichtpfad, in dem das Beleuchtungslicht auf die Probe gerichtet wird, zurück geleitet. Demgegenüber wird derjenige Teil des Detektionslichtes, der den zweiten Polarisationszustand aufweist, über den zweiten Lichtpfad auf den Detektor geleitet. Der Polarisationszustand bestimmt also, auf welchem Lichtpfad das Detektionslicht dem Detektor zugeführt wird. Dabei sind die vorstehend genannten Polarisationszustände vorzugsweise linear polarisierte Zustände, die eine polarisationsabhängige Verteilung des Detektionslichtes mittels des Lichtverteilers ermöglichen.

Als Lichtverteiler wird vorzugsweise ein polarisierender Strahlteiler z.B. in Form eines Polarisationswürfels verwendet, der das einfallende Detektionslicht polarisationsabhängig reflektiert und transmittiert. Beispielsweise kann der Strahlteiler so ausgebildet sein, dass er denjenigen Teil des Detektionslichtes, der sich wie das auf die Probe gerichtete Beleuchtungslicht in dem ersten Polarisationszustand befindet, zurück in den ersten Lichtpfad transmittiert, während er denjenigen Teil des Detektionslichtes, der den zweiten Polarisationszustand aufweist, in den zweiten Lichtpfad reflektiert. Zu berücksichtigen ist hierbei, dass das von der Probe ausgehende Detektionslicht, das beispielsweise in der Fluoreszenzmikroskopie als wesentliche Komponenten das an der Probe reflektierte Anregungslicht sowie das durch das Anregungslicht ausgelöste Fluoreszenzlicht enthält, im Wesentlichen unpolarisiert ist. Dieses unpolarisierte Detektionslicht wird durch den Strahlteiler in zwei verschieden polarisierte Komponenten zerlegt, die anschließend über die beiden separaten Lichtpfade zu dem Strahlvereiniger geleitet werden, der schließlich die beiden polarisierten Lichtkomponenten wieder zu unpolarisiertem Detektionslicht vereinigt.

Gegenüber konventionellen optischen Strahlteiler, die nur auf bestimmte Wellenlängenkombinationen des Anregungslichtes und des Detektionslichtes ausgelegt sind, hat die erfindungsgemäße Lichtverteilungseinrichtung den Vorteil, das Anregungslicht und das Detektionslicht für jede beliebige Wellenlänge in der gewünschten Weise auf die Probe bzw. den Detektor zu leiten. Eine spezielle Auslegung auf bestimmte Wellenlängenkombinationen ist nicht erforderlich.

Auch gegenüber den aus dem Stand der Technik bekannten akustooptischen Strahlteilern ergeben sich Vorteile. So ist es bei der erfindungsgemäßen Einrichtung beispielsweise nicht erforderlich, die bei akustooptischen Strahlteilern vorgesehenen Programmierungen vorzunehmen, um unterschiedliche Anregungswellenlängen einzustellen. Dementsprechend entfallen auch der technische Aufwand und die Kosten, die mit einer solchen Programmierung einhergehen.

Die Erfindung ermöglicht es, Licht beliebiger Wellenlänge beispielsweise durch entsprechende Reflexionen und Transmissionen in der gewünschten Weise zu verteilen. Sie kann ohne manuelle Anpassung für beliebige einzelne Wellenlängen und beliebig breite Wellenlängenbereiche genutzt werden. So kann beispielsweise der gleiche Wellenlängenbereich, der für den Anregungspfad geöffnet ist, zugleich für den Detektionspfad geöffnet sein. Somit ergibt sich kein Verlust an Detektionslicht, falls sich dessen Wellenlängenbereich mit dem Wellenlängenbereich des Anregungslichtes überschneidet oder sogar vollständig in diesem enthalten ist.

Die erfindungsgemäße Einrichtung ist insbesondere unempfindlich gegenüber Wellenlängenschwankungen, wie sie beispielsweise in Festkörper-Laserlichtquellen temperaturbedingt auftreten. Aufgrund ihrer Wellenlängenunabhängigkeit ist die Einrichtung auch besonders vorteilhaft in Kombination mit einer Weißlichtlaserquelle verwendbar, um eine Fluoreszenzanregung in einem weiten Wellenlängenbereich, z.B. einem Bereich von 400 nm bis 800 nm zu erzielen.

Wird die Erfindung in der Fluoreszenzmikroskopie angewandt, so enthält das auf den beiden Lichtpfaden zu dem Detektor geleitete Detektionslicht, wie schon weiter oben erwähnt, neben dem durch das Anregungslicht ausgelösten Fluoreszenzlicht auch das an der Probe reflektierte Anregungslicht sowie ggf. weitere Lichtkomponenten. Üblicherweise soll nur das Fluoreszenzlicht als Nutzlicht in dem Detektor ausgewertet werden. In diesem Fall sind die übrigen Lichtanteile, insbesondere das reflektierte Anregungslicht, als Störlicht aus dem Detektionslicht zu entfernen, bevor Letzteres auf den Detektor geleitet wird. Hierzu ist dem Strahlvereiniger vorzugsweise eine Filtereinheit nachgeordnet, die in dem Detektionslicht Nutzlicht von Störlicht trennt, so dass nur das Nutzlicht dem Detektor zugeführt wird.

Es ist jedoch darauf hinzuweisen, dass es nicht in jeder Anwendung wünschenswert ist, das reflektierte Anregungslicht aus dem Detektionslicht herauszufiltern, bevor Letzteres auf den Detektor geleitet wird. So sind auch Anwendungen denkbar, in denen neben dem Fluoreszenzlicht auch das reflektierte Anregungslicht oder andere Lichtkomponenten wie beispielsweise Raman-Streulicht ausgewertet werden sollen. Da die Erfindung vorsieht, das Detektionslicht wellenlängenunabhängig über zwei separate Lichtpfade auf den Strahlvereiniger zu leiten, kann durch die dem Strahlvereiniger nachgeordnete Filtereinheit nach Belieben festgelegt werden, welche Lichtkomponenten des Detektionslichtes schließlich dem Detektor zugeführt werden.

Vorzugsweise umfasst die Filtereinheit ein Notchfilter bzw. ein schmalbandiges Blockfilter zum Ausfiltern des Störlichtes, z.B. des das Fluoreszenzlicht auslösenden Anregungslichtes. Mittels eines solchen Filters lassen sich zuverlässig sehr schmalbandige Wellenlängenbereiche aus dem Detektionslicht ausfiltern.

In einer alternativen Ausführungsform umfasst die Filtereinheit eine sogenannte Time-Gating-Einheit, die beispielsweise nach dem in der DE 10 2010 047 237 beschriebenen Verfahren arbeitet. Bei diesem Verfahren werden das von einer z.B. fluoreszierenden Probe emittierte Fluoreszenzlicht und das von dieser Probe reflektierte Licht über eine dem Detektor nachgeschaltete Elektronik voneinander getrennt. Das Verfahren basiert auf der Tatsache, dass beide Lichtanteile nicht gleichzeitig, sondern nacheinander auf den Detektor auftreffen. Eine Time-Gating-Einheit ist insbesondere bei Verwendung einer gepulsten Laserlichtquelle bevorzugt.

Es sind jedoch auch andere Möglichkeiten denkbar, das Störlicht aus dem Detektionslicht auszufiltern. Beispielsweise kann bei Verwendung einer modulierten Lichtquelle eine entsprechende Signaltrennung durch Demodulation vorgenommen werden.

Die Polarisationseinheit weist einen Faraday-Rotator auf, der die Polarisationsrichtung des Beleuchtungslichtes um einen ersten Winkelbetrag in einem vorbestimmen Drehsinn dreht und der die Polarisationsrichtung des in den ersten Lichtpfad zurückgeleiteten Teils des Detektionslichtes um den gleichen ersten Winkelbetrag in dem gleichen Drehsinn dreht. In dieser Ausgestaltung liegen also sowohl das Beleuchtungslicht als auch das Detektionslicht, die in dem ersten Lichtpfad übertragen werden, in einem linear polarisierten Zustand vor, der durch Faraday-Rotator jeweils im gleichen Drehsinn verändert wird. Um den gewünschten Polarisationszustand des in den ersten Lichtpfad zurückgeleiteten Detektionslichtes zu gewährleisten, ist der in dem ersten Lichtpfad angeordnete Strahlteiler vorzugsweise linear polarisierend ausgebildet. Dies bedeutet, dass der Strahlteiler nur denjenigen Tel des von der Probe ausgehenden Detektionslichtes in den ersten Lichtpfad zurück reflektiert oder transmittiert, der die gewünschte Polarisationsrichtung aufweist.

Ein Faraday-Rotator ist aus einem Material gefertigt, das bei Vorliegen eines magnetischen Flusses eine definierte Änderung der Polarisationsrichtung des durch das Material tretenden Lichtes ermöglicht. Bewirkt der Faraday-Rotator beispielsweise eine Drehung der Polarisationsrichtung um 45°, so wird die Polarisationsrichtung von Licht, das den Faraday-Rotator zweimal in entgegengesetzten Richtungen durchläuft, insgesamt um 90° gedreht. Diese gleichsinnige Drehung der Polarisationsrichtung kann erfindungsgemäß dazu genutzt werden, die Polarisationszustände des Beleuchtungslichtes und des Detektionslichtes so einzustellen, dass die gewünschte räumliche Verteilung des Beleuchtungslichtes und des Detektionslichtes erzielt wird, d.h. das Beleuchtungslicht und das Detektionslicht in der gewünschten Weise auf die Probe bzw. auf den Detektor geleitet werden.

Die Polarisationseinheit weist eine Verzögerungsplatte auf, die die Polarisationsrichtung des durch den Faraday-Rotator getretenen Beleuchtungslichtes um einen zweiten Winkelbetrag in dem vorbestimmten Drehsinn dreht und die die Polarisationsrichtung des in dem ersten Lichtpfad zurückgeleiteten, linear polarisierten Teils des Detektionslichtes vor Durchtritt durch den Faraday-Rotator um den gleichen zweiten Winkelbetrag in dem entgegengesetzten Drehsinn dreht. Vorzugsweise ist der genannte zweite Winkelbetrag gleich 45°.

Die Verwendung des Faraday-Rotators, in Kombination mit einer Verzögerungsplatte gewährleistet eine Minimierung der Polarisationsdispersion in dem Detektionspfad der Einrichtung, der durch die beiden separaten Lichtpfade gegeben ist, auf denen die beiden unterschiedlich polarisierten Komponenten des Detektionslichtes übertragen werden. Unter Polarisationsdispersion ist dabei die Wellenlängenabhängigkeit zu verstehen, die die durch das jeweilige polarisierende Material bewirkte Drehung der Polarisationsrichtung aufweist. Eine nicht verschwindende Polarisationsdispersion bedeutet mithin, dass das polarisierende Material die Polarisationsrichtung des Lichtes nicht für alle Wellenlängen um den gewünschten gleichen Winkelbetrag, sondern um verschiedene Winkelbeträge dreht. Demnach sind polarisierende Materialien üblicherweise so ausgelegt, dass sie die Polarisationsrichtung des Lichtes nur für eine bestimmte Arbeitswellenlänge um den gewünschten Drehwinkel drehen, während für andere Wellenlängen gewisse Abweichungen von dem gewünschten Drehwinkel auftreten.

In der vorstehend genannten Ausführungsform wird dieser Umstand dazu genutzt, die Polarisationsdispersion für das auf den Detektor geleitete Detektionslicht zum Verschwinden zu bringen. So sind der Faraday-Rotator und die Verzögerungsplatte so ausgebildet, dass sich ihre Polarisationsdispersionen bezüglich des in den ersten Lichtweg geleiteten ersten Teils des Detektionslichtes gegeneinander aufheben. Dadurch wird die Wellenlängenunabhängigkeit der durch die Einrichtung bewirkten Polarisation des Detektionslichtes weiter verbessert.

Die Kompensation der Polarisationsdispersionen bezüglich des Detektionslichtes hat notwendigerweise zur Folge, dass sich die Rotationsdispersionen in dem Beleuchtungspfad verstärken. Dies führt zu einem gewissen (wellenlängenabhängigen) Verlust an Beleuchtungslicht, der jedoch in der praktischen Umsetzung nicht von Bedeutung ist, da heutzutage eingesetzte Laserlichtquellen hinreichend leistungsstark sind, um die benötigte Menge an Beleuchtungslicht bereitzustellen.

Gemäß der Erfindung weist die Polarisationseinheit ein polarisierendes Lichteintrittselement auf, welches das von einer Lichtquelle ausgesendete Beleuchtungslicht auf das elektrooptische Polarisationselement leitet. Das Lichteintrittselement sorgt beispielsweise dafür, dass das von der Lichtquelle ausgesendete Beleuchtungslicht in einem linear polarisierten Zustand auf das elektrooptische Polarisationselement fällt.

Das Lichteintrittselement leitet den durch das elektrooptische Polarisationselement getretenen Teil des Detektionslichtes auf den Strahlvereiniger. Das Lichteintrittselement wirkt in dieser Ausführungsform nicht nur auf das Beleuchtungslicht, sondern auch auf das in den ersten Lichtpfad zurückgeleitete Detektionslicht, um dieses dem Lichtvereiniger und anschließend dem Detektor zuzuführen.

Der Strahlteiler und/oder der Strahlvereiniger und/oder das Lichteintrittselement sind beispielsweise jeweils als Polarisationswürfel ausgebildet. Mithilfe eines solchen Polarisationswürfels lassen sich polarisierende Reflexionen und Transmissionen zum Zwecke der gewünschten Lichtverteilung besonders einfach realisieren.

In einer besonders bevorzugten Ausführungsform sind eine Weißlichtlaserquelle und/oder eine gepulste Laserlichtquelle und/oder eine modulierte Laserlichtquelle zum Aussenden des Beleuchtungslichtes vorgesehen. Da die erfindungsgemäße Einrichtung die räumliche Verteilung des Beleuchtungslichtes und des Detektionslichtes nicht wie im Stand der Technik üblich über die Wellenlängen des Lichtes, sondern über den Polarisationszustand des Lichtes steuert, können die vorstehend genannten Laserlichtquellen, die jeweils Licht mit einem mehr oder weniger breiten Wellenlängenspektrum abgeben, gewinnbringend für verschiedenste Anwendungen genutzt werden. Beispielsweise ist es bei Verwendung einer Weißlichtlaserquelle möglich, das gesamte sichtbare Wellenlängenspektrum als Anregungslicht zu nutzen und gleichzeitig Fluoreszenzlicht auszuwerten, dessen Wellenlänge innerhalb dieses Wellenlängenspektrums liegt.

Nach einem weiteren Aspekt der Erfindung ist ein Mikroskop, insbesondere ein konfokales Fluoreszenzmikroskop vorgesehen, das eine Einrichtung zum Verteilen von Beleuchtungslicht und Detektionslicht vorstehend beschriebener Art umfasst.

Ferner sieht die Erfindung ein Verfahren zum Verteilen von Beleuchtungslicht und Detektionslicht in einem Mikroskop vor.

Die Erfindung wird im Folgenden anhand der Figuren näher erläutert. Darin zeigen:
- Figur 1: ein Blockdiagramm, das ein Ausführungsbeispiel einer erfindungsgemäßen Lichtverteilereinrichtung zeigt; und
- Figur 2: eine in der Lichtverteilereinrichtung nach Figur 1 vorgesehenen Verteileroptik.

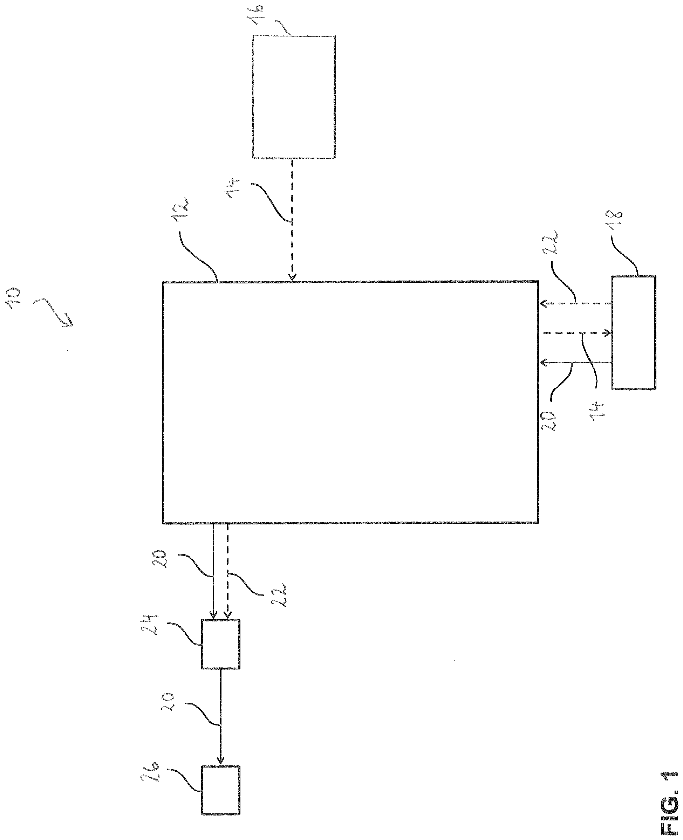

Figur 1 zeigt ein Ausführungsbeispiel einer erfindungsgemäßen Lichtverteilereinrichtung 10, die Teil eines nicht gezeigten konfokalen Fluoreszenzmikroskops ist. Dabei ist in dem Blockdiagramm nach Figur 1 lediglich die grundlegende Funktionsweise der Lichtverteilereinrichtung 10 veranschaulicht.

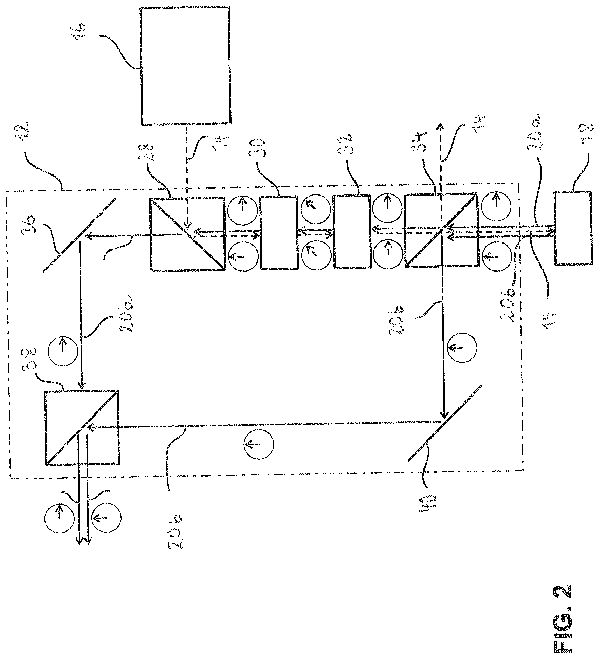

Die Lichtverteilereinrichtung 10 umfasst eine Verteileroptik 12, die später unter Bezugnahme auf Figur 2 im Einzelnen erläutert wird. Die Verteileroptik 12 empfängt linear polarisiertes Anregungslicht 14, das von einer Laserlichtquelle 16 ausgesendet wird. Die Laserlichtquelle 16 ist beispielsweise eine Weißlichtquelle, die das Anregungslicht 14 in einem Wellenlängenbereich von etwa 400 bis 800 nm ausgibt. Selbstverständlich ist der angegebene Wellenlängenbereich rein beispielhaft zu verstehen. Er kann auch breiter oder schmaler als vorstehend angegeben sein oder ein anderes Wellenlängenband umfassen.

Das Anregungslicht 14 wird von der Verteileroptik 12 auf eine fluoreszierende Probe 18 gelenkt. Die Verteileroptik 12 empfängt sämtliches Licht, das von der mit dem Anregungslicht 14 beaufschlagten Probe 18 ausgeht. Dies ist zum einen das durch das Anregungslicht 14 ausgelöste, in Figur 1 mit 20 bezeichnete Fluoreszenzlicht und zum anderen das an der Probe 18 reflektierte, in Figur 1 mit 22 bezeichnete Anregungslicht. Das Fluoreszenzlicht 20 und das reflektierte Anregungslicht 22 werden in ihrer Gesamtheit im Folgenden als Detektionslicht bezeichnet. Dabei ist darauf hinzuweisen, dass das Detektionslicht in der in Figur 1 dargestellten Fluoreszenzanwendung neben dem Fluoreszenzlicht 20 und dem reflektierten Anregungslicht 22 noch weitere Lichtkomponenten aufweisen kann, z.B. phosphoresziertes Licht und/oder Raman-Streulicht. Dies wird im Folgenden jedoch zur Vereinfachung der Erläuterung vernachlässigt.

Das durch das Fluoreszenzlicht 20 und das reflektierte Anregungslicht 22 gebildete Detektionslicht, das von der Probe 18 ausgeht, ist weitgehend unpolarisiert. Es wird innerhalb der Verteileroptik 12 zunächst in unterschiedlich linear polarisierte Lichtanteile getrennt, die anschließend wieder zu unpolarisiertem Licht zusammengefasst werden. Im Ergebnis lenkt so die Verteileroptik 12 das unpolarisierte Fluoreszenzlicht 20 und das unpolarisierte, reflektierte Anregungslicht 22 auf eine Filtereinheit 24. Die Filtereinheit 24 ist beispielsweise eine Time-Gating-Einheit oder ein Notchfilter, die bzw. das das reflektierte Anregungslicht 22 aus dem Detektionslicht ausfiltert. Dabei wird im Folgenden angenommen, dass das reflektierte Anregungslicht 22 in der in Figur 1 veranschaulichten Fluoreszenzanwendung als Störlicht angesehen wird. Wie schon weiter oben ausgeführt, ist dies jedoch nicht notwendigerweise so. Beispielsweise sind auch Anwendungen denkbar, in denen neben dem Fluoreszenzlicht 20 auch das reflektierte Anregungslicht 22 ausgewertet werden soll. In letzterem Fall kann die Filtereinheit 24 weggelassen werden.

Die Filtereinheit 24 gibt das Detektionslicht, aus dem das reflektierte Anregungslicht 22 ausgefiltert ist und das somit nur noch aus dem Fluoreszenzlicht 20 besteht, auf einen Detektor 26 aus. Der Detektor 26 setzt schließlich das empfangene Fluoreszenzlicht 20 in auswertbare Signale um.

In Figur 2 ist die Funktionsweise der Verteileroptik 12 im Einzelnen veranschaulicht. Dabei ist darauf hinzuweisen, dass in Figur 1 zur Vereinfachung der Darstellung das Störlicht, d.h. das an der Probe 18 reflektierte Anregungslicht 22, nicht dargestellt ist. Es wird jedoch in der Verteilungsoptik 12 in der gleichen Weise verarbeitet, wie dies für das Fluoreszenzlicht 20 der Fall ist.

Die Verteileroptik 12 enthält einen ersten polarisierenden Strahlteilerwürfel 28 als Lichteintrittselement, welches das von der Laserlichtquelle 16 ausgegebene, linear polarisierte Anregungslicht 14 empfängt.

Der erste Strahlteilerwürfel 28 reflektiert das senkrecht zur Einfallsebene linear polarisierte Anregungslicht 14 mit einem hohen Reflexionsgrad, z.B. 99,99 %. Hierzu ist die Polarisationsrichtung des von der Laserlichtquelle 16 ausgegebenen Anregungslichtes 14 vorzugsweise von vornherein entsprechend orientiert. In Figur 2 sind die durch die Verteileroptik 12 eingestellten Polarisationsrichtungen des Anregungslichtes 14 und des Fluoreszenzlichtes 20 in den einzelnen Verteilerstufen durch die Kreis-/Pfeilsymbole angedeutet.

Der Strahlteilerwürfel 28 reflektiert das Anregungslicht 14 auf einen Faraday-Rotator 30, der die Polarisationsrichtung des Anregungslichtes 14 um 45° in einem ersten Drehsinn dreht. Anschließend fällt das Anregungslicht 14 auf eine λ/2-Verzögerungsplatte 32, die für eine weitere Drehung der Polarisationsrichtung des Anregungslichtes 14 um 45° in gleichem Drehsinn sorgt. Durch den Faraday-Rotator 30 und die Verzögerungsplatte 32 wird somit die Polarisationsrichtung des Anregungslichtes 14 insgesamt um 90° in dem ersten Drehsinn gedreht.

Die Verteileroptik 12 enthält einen zweiten polarisierenden Strahlteilerwürfel 34, auf den das durch die Verzögerungsplatte 32 getretene Anregungslicht 14 fällt. Gegenüber dem zweiten Strahlteilerwürfel 34 ist das von der Verzögerungsplatte 32 ausgegebene Anregungslicht 14 parallel polarisiert. Somit transmittiert der Strahlteilerwürfel 34 das Anregungslicht 14 mit einem hohen Transmissionsgrad, z.B. etwa 98 %, auf die Probe 18.

Das auf die Probe 18 fallende, linear polarisierte Anregungslicht 14 löst in der Probe 18 das Fluoreszenzlicht 20 aus, das wiederum in die Verteileroptik 12 eintritt. Wie weiter oben erwähnt, ist das Fluoreszenzlicht 20 weitgehend unpolarisiert. Es beinhaltet somit zwei senkrecht zueinander polarisierte Fluoreszenzlichtkomponenten, die in Figur 2 mit 20a und 20b bezeichnet sind. Dabei soll die erste Fluoreszenzlichtkomponente 20a parallel und die zweite Fluoreszenzlichtkomponente 20b senkrecht zur Lichteinfallsebene ausgerichtet sein.

Die erste Fluoreszenzlichtkomponente 20a passiert den polarisierenden Strahlteilerwürfel 34 und anschließend die Verzögerungsplatte 32, welche die Fluoreszenzlichtkomponente 20a um 45° in einem zweiten Drehsinn dreht, der entgegengesetzt dem ersten Drehsinn ist, in dem die Verzögerungsplatte 34 die Polarisationsrichtung des sich in entgegengesetzter Richtung ausbreitenden, auf die Probe 18 gerichteten Anregungslichtes 14 dreht. Der Drehsinn, in dem die Verzögerungsplatte 32 die Polarisationsrichtung dreht, ändert sich also mit der Durchgangsrichtung, in der das Licht die Verzögerungsplatte 32 passiert.

Die erste Fluoreszenzlichtkomponente 20a fällt anschließend auf den Faraday-Rotator 30, der die Polarisationsrichtung der ersten Fluoreszenzlichtkomponente 20a um 45° in dem ersten Drehsinn dreht. Der Drehsinn des Faraday-Rotators 30 ist also unabhängig von der Lichtdurchgangsrichtung. Dies bedeutet, dass der Faraday-Rotator 30 die Änderung der Polarisationsrichtung der ersten Fluoreszenzlichtkomponente 20a, die durch die Verzögerungsplatte 32 bewirkt wird, wieder rückgängig macht. Im Ergebnis ändert sich so die Polarisationsrichtung der ersten Fluoreszenzlichtkomponente 20a beim Durchtritt durch die durch die Verzögerungsplatte 32 und den Faraday-Rotator 30 gebildete Einheit nicht.

Nach Durchtritt durch den Faraday-Rotator 30 weist die erste Fluoreszenzlichtkomponente 20a eine Polarisationsrichtung auf, die senkrecht zur Polarisationsrichtung des an dem ersten Strahlteilerwürfel 28 reflektierten Anregungslichtes 14 ist. Während letzterer an dem Strahlteilerwürfel 28 reflektiert wird, geht deshalb die zweite Fluoreszenzlichtkomponente 20a durch den Strahlteilerwürfel 28 hindurch und fällt anschließend auf einen Spiegel 36. Der Spiegel 36 reflektiert die linear polarisierte erste Fluoreszenzlichtkomponente 20a auf einen dritten polarisierenden Strahlteilerwürfel 38. Der Strahlteilerwürfel 38 ist so ausgebildet, dass er die erste Fluoreszenzlichtkomponente 20a in Richtung der in Figur 2 nicht gezeigten Filtereinheit 24 transmittiert.

Die von der Probe 18 ausgehende zweite Fluoreszenzlichtkomponente 20b, deren Polarisationsrichtung senkrecht zur Polarisationsrichtung der ersten Fluoreszenzlichtkomponente 20a liegt, wird an dem polarisierenden Strahlteilerwürfel 34 auf einen Spiegel 40 reflektiert, der die zweite Fluoreszenzlichtkomponente 20b wiederum auf den Strahlteilerwürfel 38 reflektiert. Die Polarisationsrichtung der zweiten Fluoreszenzlichtkomponente 20b ist so orientiert, dass sie an dem Strahlteilerwürfel 38 in Richtung der Filtereinheit 24 reflektiert wird.

Die Verteileroptik 12 überträgt demnach die erste Fluoreszenzlichtkomponente 20a in einem ersten Lichtpfad vor, der durch die Komponenten 34, 32, 30, 28 und 36 festgelegt ist, und die zweite Fluoreszenzlichtkomponente 20b in einem zweiten Lichtpfad, der durch die Komponenten 34 und 40 definiert ist. Die in diesen beiden separaten Lichtpfaden übertragenen Fluoreszenzlichtkomponenten 20a und 20b werden dann durch den Strahlteilerwürfel 38 wieder vereinigt.

In dem in Figur 2 gezeigten Ausführungsbeispiel wirken der Faraday-Rotator 30 und die Verzögerungsplatte 32 so zusammen, dass sich ihre Polarisationsdispersionen bezüglich der ersten Fluoreszenzlichtkomponente 20a, die in dem vorstehend genannten ersten Lichtpfad auf den Strahlteilerwürfel 38 geleitet wird, gegeneinander aufheben. Dadurch ist sichergestellt, dass die in Figur 2 gezeigten Polarisationszustände, welche die Verteileroptik 12 zur räumlichen Verteilung der beiden Fluoreszenzlichtkomponenten 20a und 20b (und des in Figur 2 nicht gezeigten reflektierten Anregungslichtes) einstellt, für sämtliche Wellenlängen des Fluoreszenzlichtes (bzw. des reflektierten Anregungslichtes) realisiert werden können. Die Polarisationsdispersionen des Faraday-Rotators 30 und der Verzögerungsplatte 32 sind mit anderen Worten gerade so gewählt, dass sie sich in dem zu dem Detektor 26 führenden Detektionspfad gegeneinander aufheben.

Daraus folgt im Umkehrschluss, dass sich die genannten Polarisationsdispersionen auf dem auf die Probe 18 gerichteten Anregungspfad verstärken. Dies hat wiederum zur Folge, dass ein Teil des von der Laserlichtquelle 16 ausgesendeten Anregungslichtes 14 in Abhängigkeit der Wellenlänge den zweiten Strahlteilerwürfel nicht passiert, sondern an diesem reflektiert wird. Diese reflektierte Lichtkomponente stellt einen wellenlängenabhängigen Lichtverlust dar, der jedoch angesichts des Umstandes, dass die Laserlichtquelle 16 in jedem Fall ausreichend Lichtleistung zur Verfügung stellen kann, tolerierbar ist. Im Ergebnis wird so zu Gunsten eines möglichst breitbandigen Detektionpfades die Einkoppeleffizienz des Anregungslichtes 14 in den Anregungspfad herabgesetzt.

Die in Figur 2 dargestellte Ausführungsform ist lediglich beispielhaft zu verstehen. Es sind eine Reihe von Abwandlungen insbesondere im Hinblick auf die durch die Verteileroptik 12 realisierten Polarisationszustände des Anregungslichtes 14 und des Fluoreszenzlichtes 20 denkbar. Liegen beispielsweise die Wellenlängen des zu detektierende Fluoreszenzlichtes 20 in einem sehr schmalen Wellenlängenbereich, so kann auf die vorstehend erläuterte Kompensation der Rotationsdispersion auch verzichtet werden, da der Detektionspfad ohnehin nicht breitbandig ausgeführt sein muss. Dementsprechend könnte in diesem Fall die Verzögerungsplatte 32 weggelassen werden, was jedoch nicht gemäß der vorliegenden Erfindung wäre.

### Bezugszeichenliste

- 10: Lichtverteilereinrichtung
- 12: Verteileroptik
- 14: Anregungslicht
- 16: Laserlichtquelle
- 18: Probe
- 20: Fluoreszenzlicht
- 20a: erste Fluoreszenzlichtkomponente
- 20b: zweite Fluoreszenzlichtkomponente
- 22: reflektiertes Anregungslicht
- 24: Filtereinheit
- 26: Detektor
- 28: erster Strahlteilerwürfel
- 30: Faraday-Rotator
- 32: Verzögerungsplatte
- 34: zweiter Strahlteilerwürfel
- 36: Spiegel
- 38: dritter Strahlteilerwürfel
- 40: Spiegel

## Patentansprüche

1. Einrichtung (10) zum Verteilen von linear polarisiertem Beleuchtungslicht (14) und Detektionslicht (20) in einem Mikroskop; mit
einer Verteileroptik (12), die das linear polarisierte Beleuchtungslicht (14) auf eine Probe (18) und das von der Probe (18) ausgehende Detektionslicht (20) auf mindestens einen Detektor (26) leitet;
wobei die Verteileroptik (12) umfasst:
eine in einem ersten Lichtpfad angeordnete Polarisationseinheit (28, 30, 32) zum Überführen des auf die Probe (18) gerichteten Beleuchtungslichtes (14) in einen ersten Polarisationszustand;
einen in dem ersten Lichtpfad angeordneten Strahlteiler (34), der eine Polarisationsabhängigkeit derart aufweist, dass er das in den ersten Polarisationszustand überführte Beleuchtungslicht (14) auf die Probe (18) leitet und einen ersten Teil (20a) des von der Probe (18) ausgehenden Detektionslichtes (20), der den ersten Polarisationszustand aufweist, zurück in den ersten Lichtpfad leitet, während er einen zweiten Teil (20b) des Detektionslichtes (20), der einen von dem ersten Polarisationszustand verschiedenen zweiten Polarisationszustand aufweist, in einen von dem ersten Lichtpfad getrennten zweiten Lichtpfad leitet; und
einen Strahlvereiniger (38), der den ersten Teil (20a) und den zweiten Teil (20b) des Detektionslichtes (20) miteinander vereinigt und auf den Detektor (26) leitet,
wobei die Polarisationseinheit (28, 30, 32) einen Faraday-Rotator (30), der die Polarisationsrichtung des Beleuchtungslichtes (14) um einen ersten Winkelbetrag in einem vorbestimmten Drehsinn dreht und der die Polarisationsrichtung des in den ersten Lichtpfad zurück geleiteten ersten Teils (20a) des Detektionslichtes (20) um den gleichen ersten Winkelbetrag in dem gleichen Drehsinn dreht, und eine Verzögerungsplatte (32) aufweist, die die Polarisationsrichtung des durch den Faraday-Rotator (30) getretenen Beleuchtungslichtes (14) um einen zweiten Winkelbetrag in dem vorbestimmten Drehsinn dreht und die die Polarisationsrichtung des in den ersten Lichtpfad zurück geleiteten, linear polarisierten ersten Teils (20a) des Detektionslichtes (20) vor Durchtritt durch den Faraday-Rotator (30) um den gleichen zweiten Winkelbetrag in dem entgegengesetzten Drehsinn dreht,
**dadurch gekennzeichnet, dass** die Polarisationseinheit (28, 30, 32) ein polarisierendes Lichteintrittselement (28) aufweist, welches das von einer Lichtquelle (16) ausgesendete Beleuchtungslicht (14) auf den Faraday-Rotator (30) leitet und das den durch den Faraday-Rotator (30) getretenen Teil des Detektionslichtes (20) auf den Strahlvereiniger (38) leitet,
wobei nur in dem ersten der beiden Lichtpfade ein Faraday-Rotator (30) und eine Verzögerungsplatte (32) angeordnet sind.

2. Einrichtung (10) nach Anspruch 1, **gekennzeichnet durch** eine dem Strahlvereiniger (38) nachgeordnete Filtereinheit (24), die in dem Detektionslicht (20) Nutzlicht von Störlicht trennt.

3. Einrichtung (10) nach Anspruch 2, **dadurch gekennzeichnet, dass** die Filtereinheit (24) ein Notchfilter zum Ausfiltern des Störlichtes umfasst.

4. Einrichtung (10) nach Anspruch 2, **dadurch gekennzeichnet, dass** die Filtereinheit (24) eine Time-Gating-Einheit umfasst.

5. Einrichtung (10) nach einem der vorhergehenden Ansprüche, **dadurch gekennzeichnet, dass** der erste Winkelbetrag gleich 45° ist.

6. Einrichtung (10) nach einem der vorhergehenden Ansprüche, **dadurch gekennzeichnet, dass** der zweite Winkelbetrag gleich 45° ist.

7. Einrichtung (10) nach einem der vorhergehenden Ansprüche, **dadurch gekennzeichnet, dass** der Strahlteiler (34) und/oder der Strahlvereiniger (38) und/oder das Lichteintrittselement (28) jeweils als polarisierender Strahlteilerwürfel ausgebildet sind.

8. Einrichtung (10) nach einem der vorhergehenden Ansprüche, **dadurch gekennzeichnet, dass** der Faraday-Rotator (30) und die Verzögerungsplatte (32) so ausgebildet sind, dass sich ihre Polarisationsdispersionen bezüglich des in den ersten Lichtweg geleiteten ersten Teils (20a) des Detektionslichtes (20) gegeneinander aufheben.

9. Einrichtung (10) nach einem der vorhergehenden Ansprüche, **gekennzeichnet durch** eine Weißlichtlaserquelle und/oder eine gepulste Laserlichtquelle und/oder eine modulierte laserlichtquelle zum Aussenden des Beleuchtungslichtes (14).

10. Verfahren zum Verteilen von linear polarisiertem Beleuchtungslicht (14) und Detektionslicht (20) in einem Mikroskop, wobei
das linear polarisierte Beleuchtungslicht (14) auf eine Probe (18) und das von der Probe (18) ausgehende Detektionslicht (20) auf mindestens einen Detektor (26) geleitet wird;
wobei
das in einem ersten Lichtpfad auf die Probe (18) gerichtete Beleuchtungslicht (14) mittels einer in der Verteileroptik (12) enthaltenen Polarisationseinheit (28, 30, 32) in einen ersten Polarisationszustand überführt wird;
in dem ersten Lichtpfad ein Strahlteiler (34) angeordnet wird, der das in den ersten Polarisationszustand überführte Beleuchtungslicht (14) auf die Probe und einen ersten Teil (20a) des von der Probe (18) ausgehenden Detektionslichtes (20), der den ersten Polarisationszustand aufweist, zurück in den ersten Lichtpfad leitet, während er einen zweiten Teil (20b) des Detektionslichtes (20), der einen von dem ersten Polarisationszustand verschiedenen zweiten Polarisationszustand aufweist, in einen von dem ersten Lichtpfad getrennten zweiten Lichtpfad leitet;
der erste Teil (20a) und der zweite Teil (20b) des Detektionslichtes (20) mittels eines Strahlvereinigers (38) miteinander vereinigt und auf den Detektor (26) geleitet werden,
wobei die Polarisationseinheit (28, 30, 32) einen Faraday-Rotator (30), der die Polarisationsrichtung des Beleuchtungslichtes (14) um einen ersten Winkelbetrag in einem vorbestimmten Drehsinn dreht und das die Polarisationsrichtung des in den ersten Lichtpfad zurück geleiteten ersten Teils (20a) des Detektionslichtes (20) um den gleichen ersten Winkelbetrag in dem gleichen Drehsinn dreht, und eine Verzögerungsplatte (32) aufweist, die die Polarisationsrichtung des durch den Faraday-Rotator (30) getretenen Beleuchtungslichtes (14) um einen zweiten Winkelbetrag in dem vorbestimmten Drehsinn dreht und die die Polarisationsrichtung des in den ersten Lichtpfad zurück geleiteten, linear polarisierten ersten Teils (20a) des Detektionslichtes (20) vor Durchtritt durch den Faraday-Rotator (30) um den gleichen zweiten Winkelbetrag in dem entgegengesetzten Drehsinn dreht,
**dadurch gekennzeichnet, dass** die Polarisationseinheit (28, 30, 32) ein polarisierendes Lichteintrittselement (28) aufweist, mittels dessen das von einer Lichtquelle ausgesendete Beleuchtungslicht auf den Faraday-Rotator (30) geleitet wird und der durch den Faraday-Rotator (30) getretene Teil des Detektionslichtes (20) auf den Strahlvereiniger (38) geleitet wird,
wobei nur in dem ersten der beiden Lichtpfade ein Faraday-Rotator (30) und eine Verzögerungsplatte (32) angeordnet sind.

## Claims

1. Device (10) for distributing linearly polarised illumination light (14) and detection light (20) in a microscope; comprising
a distribution optical unit (12), which guides the linearly polarised illumination light (14) onto a sample (18) and guides the detection light (20) emanating from the sample (18) onto at least one detector (26); wherein the distribution optical unit (12) comprises:
a polarisation unit (28, 30, 32) arranged in a first light path for converting the illumination light (14) directed onto the sample (18) into a first polarisation state;
a beam splitter (34) arranged in the first light path and having a polarisation dependence in such a way that it guides the illumination light (14) that has been converted into the first polarisation state onto the sample (18) and guides a first portion (20a) of the detection light (20) emanating from the sample (18), said first portion having the first polarisation state, back into the first light path, while it guides a second portion (20b) of the detection light (20), said second portion having a second polarisation state, which is different from the first polarisation state, into a second light path separated from the first light path; and
a beam combiner (38), which combines the first portion (20a) and the second portion (20b) of the detection light (20) with one another and guides the latter onto the detector (26),
wherein the polarisation unit (28, 30, 32) has a Faraday rotator (30), which rotates the direction of polarisation of the illumination light (14) by a first angle magnitude in a predetermined direction of rotation and which rotates the direction of polarisation of the first portion (20a) of the detection light (20), said first portion having been guided back into the first light path, by the same first angle magnitude in the same direction of rotation, and a retardation plate (32), which rotates the direction of polarisation of the illumination light (14) that has passed through the Faraday rotator (30) by a second angle magnitude in the predetermined direction of rotation and which rotates the direction of polarisation of the linearly polarised first portion (20a) of the detection light (20), said first portion having been guided back into the first light path, before passage through the Faraday rotator (30), by the same second angle magnitude in the opposite direction of rotation,
**characterized in that** the polarisation unit (28, 30, 32) has a polarising light entrance element (28), which guides the illumination light (14) emitted by a light source (16) onto the Faraday rotator (30) and guides the portion of the detection light (20) that has passed through the Faraday rotator (30) onto the beam combiner (38),
wherein a Faraday rotator (30) and a retardation plate (32) are arranged only in the first of the two light paths.

2. Device (10) according to Claim 1, **characterized by** a filter unit (24) disposed downstream of the beam combiner (38), said filter unit separating useful light from extraneous light in the detection light (20).

3. Device (10) according to Claim 2, **characterized in that** the filter unit (24) comprises a notched filter for filtering out the extraneous light.

4. Device (10) according to Claim 2, **characterized in that** the filter unit (24) comprises a time gating unit.

5. Device (10) according to any of the preceding claims, **characterized in that** the first angle magnitude is equal to 45°.

6. Device (10) according to any of the preceding claims, **characterized in that** the second angle magnitude is equal to 45°.

7. Device (10) according to any of the preceding claims, **characterized in that** the beam splitter (34) and/or the beam combiner (38) and/or the light entrance element (28) are/is embodied in each case as a polarising beam splitter cube.

8. Device (10) according to any of the preceding claims, **characterized in that** the Faraday rotator (30) and the retardation plate (32) are embodied such that their polarisation dispersions with respect to the first portion (20a) of the detection light (20), said first portion having been guided into the first light path, cancel one another out.

9. Device (10) according to any of the preceding claims, **characterized by** a white light laser source and/or a pulsed laser light source and/or a modulated laser light source for emitting the illumination light (14).

10. Method for distributing linearly polarised illumination light (14) and detection light (20) in a microscope, wherein
the linearly polarised illumination light (14) is directed onto a sample (18) and the detection light (20) emanating from the sample (18) is directed onto at least one detector (26);
wherein
the illumination light (14) directed onto the sample (18) in a first light path is converted into a first polarisation state by means of a polarisation unit (28, 30, 32) contained in the distribution optical unit (12); a beam splitter (34) is arranged in the first light path, which beam splitter guides the illumination light (14) that has been converted into the first polarisation state onto the sample and guides a first portion (20a) of the detection light (20) emanating from the sample (18), said first portion having the first polarisation state, back into the first light path, while it guides a second portion (20b) of the detection light (20), said second portion having a second polarisation state, which is different from the first polarisation state, into a second light path separated from the first light path; the first portion (20a) and the second portion (20b) of the detection light (20) are combined with one another and directed onto the detector (26) by means of a beam combiner (38),
wherein the polarisation unit (28, 30, 32) has a Faraday rotator (30), which rotates the direction of polarisation of the illumination light (14) by a first angle magnitude in a predetermined direction of rotation and which rotates the direction of polarisation of the first portion (20a) of the detection light (20), said first portion having been guided back into the first light path, by the same first angle magnitude in the same direction of rotation, and a retardation plate (32), which rotates the direction of polarisation of the illumination light (14) that has passed through the Faraday rotator (30) by a second angle magnitude in the predetermined direction of rotation and which rotates the direction of polarisation of the linearly polarised first portion (20a) of the detection light (20), said first portion having been guided back into the first light path, before passage through the Faraday rotator (30), by the same second angle magnitude in the opposite direction of rotation,
**characterized in that** the polarisation unit (28, 30, 32) has a polarising light entrance element (28), by means of which guides the illumination light emitted by a light source onto the Faraday rotator (30) and the portion of the detection light (20) that has passed through the Faraday rotator (30) is guided onto the beam combiner (38),
wherein a Faraday rotator (30) and a retardation plate (32) are arranged only in the first of the two light paths.

## Revendications

1. Dispositif (10) pour distribuer de la lumière d'éclairage (14) à polarisation linéaire et de la lumière de détection (20) dans un microscope ; comprenant une optique de distribution (12) qui dirige la lumière d'éclairage (14) à polarisation linéaire sur un échantillon (18) et la lumière de détection (20) émanant de l'échantillon (18) sur au moins un détecteur (26) ; l'optique de distribution (12) comprenant :
une unité de polarisation (28, 30, 32) disposée dans un premier trajet de lumière, servant à transposer la lumière d'éclairage (14) orientée sur l'échantillon (18) dans un premier état de polarisation ;
un séparateur de rayons (34) disposé dans le premier trajet de lumière, qui possède une dépendance à la polarisation de telle sorte qu'il dirige sur l'échantillon (18) la lumière d'éclairage (14) transposée dans le premier état de polarisation et dirige une première partie (20a) de la lumière de détection (20) émanant de l'échantillon (18) qui présente le premier état de polarisation, en retour dans le premier trajet de lumière, tandis qu'il dirige une deuxième partie (20b) de la lumière de détection (20), qui présente un deuxième état de polarisation différent du premier état de polarisation, dans un deuxième trajet de lumière différent du premier trajet de lumière ; et
un combineur de rayons (38), qui combine entre elles la première partie (20a) et la deuxième partie (20b) de la lumière de détection (20) et les dirige sur le détecteur (26),
l'unité de polarisation (28, 30, 32) possédant un rotateur de Faraday (30), qui tourne la direction de polarisation de la lumière d'éclairage (14) d'une première valeur angulaire dans un sens de rotation prédéterminé et qui tourne la direction de polarisation de la première partie (20a) de la lumière de détection (20) renvoyée dans le premier trajet de lumière de la même première valeur angulaire dans le même sens de rotation, et une lame à retard (32), qui tourne la direction de polarisation de la lumière d'éclairage (14) séparée par le rotateur de Faraday (30) d'une deuxième valeur angulaire dans le sens de rotation prédéterminé et qui tourne la direction de polarisation de la première partie (20a) à polarisation linéaire de la lumière de détection (20) renvoyée dans le premier trajet de lumière, avant le passage à travers le rotateur de Faraday (30), de la même deuxième valeur angulaire dans le sens de rotation inverse,
**caractérisé en ce que** l'unité de polarisation (28, 30, 32) possède un élément d'entrée de lumière (28) polarisant qui dirige la lumière d'éclairage (14) émise par une source de lumière (16) sur le rotateur de Faraday (30) et la partie de la lumière de détection (20) séparée par le rotateur de Faraday (30) sur le combineur de rayons (38),
un rotateur de Faraday (30) et une lame à retard (32) n'étant disposés que dans le premier des deux trajets de lumière.

2. Dispositif (10) selon la revendication 1, **caractérisé par** une unité de filtrage (24) disposée après le combineur de rayons (38), laquelle sépare la lumière utile de la lumière parasite dans la lumière de détection (20) .

3. Dispositif (10) selon la revendication 2, **caractérisé en ce que** l'unité de filtrage (24) comporte un filtre coupe-bande servant à éliminer par filtrage la lumière parasite.

4. Dispositif (10) selon la revendication 2, **caractérisé en ce que** l'unité de filtrage (24) comporte une unité de portillonnage dans le temps.

5. Dispositif (10) selon l'une des revendications précédentes, **caractérisé en ce que** la première valeur angulaire est égale à 45°.

6. Dispositif (10) selon l'une des revendications précédentes, **caractérisé en ce que** la deuxième valeur angulaire est égale à 45°.

7. Dispositif (10) selon l'une des revendications précédentes, **caractérisé en ce que** le séparateur de rayons (34) et/ou le combineur de rayons (38) et/ou l'élément d'entrée de lumière (28) sont respectivement réalisés sous la forme de cubes séparateurs de rayons polarisants.

8. Dispositif (10) selon l'une des revendications précédentes, **caractérisé en ce que** le rotateur de Faraday (30) et la lame à retard (32) sont configurés de telle sorte que leurs dispersions de polarisation concernant la première partie (20a) de la lumière de détection (20) dirigée dans le premier trajet de lumière s'annulent mutuellement.

9. Dispositif (10) selon l'une des revendications précédentes, **caractérisé par** une source de laser à lumière blanche et/ou une source de lumière laser pulsée et/ou une source de lumière laser modulée servant à l'émission de la lumière d'éclairage (14).

10. Procédé pour distribuer de la lumière d'éclairage (14) à polarisation linéaire et de la lumière de détection (20) dans un microscope,
la lumière d'éclairage (14) à polarisation linéaire étant dirigée sur un échantillon (18) et la lumière de détection (20) émanant de l'échantillon (18) étant dirigée sur au moins un détecteur (26) ;
la lumière d'éclairage (14) orientée sur l'échantillon (18) dans un premier trajet de lumière étant transposée dans un premier état de polarisation au moyen d'une unité de polarisation (28, 30, 32) incluse dans l'optique de distribution (12) ;
un séparateur de rayons (34) étant disposé dans le premier trajet de lumière, lequel dirige sur l'échantillon (18) la lumière d'éclairage (14) transposée dans le premier état de polarisation et dirige une première partie (20a) de la lumière de détection (20) émanant de l'échantillon (18), qui présente le premier état de polarisation, en retour dans le premier trajet de lumière, tandis qu'il dirige une deuxième partie (20b) de la lumière de détection (20), qui présente un deuxième état de polarisation différent du premier état de polarisation, dans un deuxième trajet de lumière différent du premier trajet de lumière ;
la première partie (20a) et la deuxième partie (20b) de la lumière de détection (20) étant combinées entre elles au moyen d'un combineur de rayons (38) et dirigées sur le détecteur (26),
l'unité de polarisation (28, 30, 32) possédant un rotateur de Faraday (30), qui tourne la direction de polarisation de la lumière d'éclairage (14) d'une première valeur angulaire dans un sens de rotation prédéterminé et qui tourne la direction de polarisation de la première partie (20a) de la lumière de détection (20) renvoyée dans le premier trajet de lumière de la même première valeur angulaire dans le même sens de rotation, et une lame à retard (32), qui tourne la direction de polarisation de la lumière d'éclairage (14) séparée par le rotateur de Faraday (30) d'une deuxième valeur angulaire dans le sens de rotation prédéterminé et qui tourne la direction de polarisation de la première partie (20a) à polarisation linéaire de la lumière de détection (20) renvoyée dans le premier trajet de lumière, avant le passage à travers le rotateur de Faraday (30), de la même deuxième valeur angulaire dans le sens de rotation inverse,
**caractérisé en ce que** l'unité de polarisation (28, 30, 32) possède un élément d'entrée de lumière (28) polarisant, au moyen duquel la lumière d'éclairage émise par une source de lumière est dirigée sur le rotateur de Faraday (30) et la partie de la lumière de détection (20) séparée par le rotateur de Faraday (30) est dirigée sur le combineur de rayons (38),
un rotateur de Faraday (30) et une lame à retard (32) n'étant disposés que dans le premier des deux trajets de lumière.
